# EUROPEAN PATENT APPLICATION

(11) **EP 2 451 149 A2**
(43) Date of publication of application: **09.05.2012**
(21) Application number: 11250734.8
(22) Date of filing: 19.08.2011
(51) Int. Cl.: H04N 5/353

(54) **High-speed video camera**

(30) Priority: 01.09.2010 JP 2010195643
(71) Applicant: Kabushiki Kaisha Nac Image Technology, Minato-ku, Tokyo (JP)
(72) Inventor: Oguma, Kazuhiko, Tokyo (JP)
(74) Representative: Powell, Timothy John

(57) **Abstract**

A high-speed video camera having a solid-state image sensor consisting of a plurality of pixel blocks arranged lengthwise and breadthwise, each pixel block consisting of a plurality of pixels arranged lengthwise and breadthwise, a control device for controlling so that exposure times of pixels in each of the pixel blocks are different from one another, and a control device for controlling so that a plurality of different address are assigned to the pixels, respectively, the same address are assigned to the pixels of the same coordinate in the pixel blocks, and exposure times of pixels of the same address in the pixel blocks are the same with one another.

## Description

The present invention relates to a high-speed video camera, and more particularly, relates to a high-speed video camera using a solid-state image sensor.

In regard to a high-speed video camera using CMOS-type or CCD-type solid-state image sensor employed widely for industrial purposes, there is a camera system ( a first system ), wherein high-speed scanning and sequential reading of the pixels are conducted so as to attain a high-speed photography.

There is also another system ( a second system ), wherein an image is divided into a plurality of pixel blocks, each having a plurality of pixels, and parallel and simultaneous scanning of the pixels in each block is conducted, so as to attain a higher speed photography.

There is a further system ( a third system ), wherein a plurality of memories are installed in each pixel, image signals of different exposure times are memorized in the different memories, and then the memorized image signals are read, so as to attain a higher speed photography.

In the above first and second systems, the photographing speed ( time ) is determined substantially by a time required for reading sequentially all pixels.

In the above third systems, the photographing speed ( time ) is determined by a time required for exposure and a time required for transferring a signal from a photoelectric transducer in each pixel to a memory in each pixel. In this system, the time required for reading all pixels has no relation to the photographing speed ( time ), so that a high photographing speed ( time ) can be obtained. However, in the solid-state image sensor, a signal in each pixel must be transferred to the memory in the pixel and at the same time a video information must be transferred to a neighboring memory by driving a large number of memories corresponding to a number of all pixels x a number of memories in each pixel.

Since it is difficult to perform this transfer drive for a short time, the photographing speed ( time ) is restricted.

An object of the present invention is to provide a high-speed video camera, wherein a restriction determined by a time required for reading all pixels and a difficulty of driving of a large number of memories can be obviated, so that a higher photographing speed ( time ) can be obtained.

A further object of the present invention is to provide a high-speed video camera comprising a solid-state image sensor consisting of a plurality of pixel blocks arranged lengthwise and breadthwise, each pixel block consisting of a plurality of pixels arranged lengthwise and breadthwise, control means for controlling so that exposure times of pixels in each of the pixel blocks are different from one another, and control means for controlling so that a plurality of different address are assigned to the pixels, respectively, the same address are assigned to the pixels of the same coordinate in the pixel blocks, and exposure times of pixels of the same address in the pixel blocks are the same with one another.

Yet a further object of the present invention is to provide a high-speed video camera, wherein video signals of one frame obtained from the solid-state image sensor are separated into signals for pixels of the same address in the pixel blocks and arranged to original coordinate positions in the solid-state image sensor, and an output is obtained after interpolating video signals of vacant coordinate positions in the solid-state image sensor.

A still further object of the present invention is to provide a high-speed video camera, wherein each of the pixels has a photoelectric transducer and a pixel memory for storing therein temporarily an video information obtained from the photoelectric transducer.

According to the high-speed video camera of the present invention the following effects can be obtained.

The photographing speed ( time ) of the high-speed video camera according to the present invention is determined by a time difference between the exposure times of the pixels in the pixel blocks, and not affected by the time required for reading all pixels. The time difference is a time between the start of the exposure of the pixel and the end of the transfer of the video signal to the memory in the pixel. The time difference can be set to a very short time, so that a very high photographing speed ( time ) can be obtained.

The transmitting numbers of the video signals from the photoelectric transducers to the memories at the same time are similar to the numbers of the pixel blocks, and are small, so that the transfer drive of the video signals is easy.

In the high-speed video camera according to the present invention, video signals of a frame stored in the pixels of the same addresses of the solid-stage image sensor are taken out, arranged in the original coordinate positions of the solid-stage image sensor, and separated into video signals obtained at different time of exposure. The separated video signals relate to pixels including many vacant pixels having no information.

An information for the vacant pixels is created by a suitable interpolation processing system, in the present invention. As a result, an image photographed at a very high speed can be reproduced without spoiling the resolution.

These and other aspects and objects of the present invention will be better appreciated and understood when considered in conjunction with the following description and the accompanying drawings. It should be understood, however, that the following description, while indicating preferred embodiments of the present invention, is given by way of illustration and not of limitation. Many changes and modifications may be made within the scope of the present invention without departing from the spirit thereof, and the invention includes all such modifications.
FIG. 1 is a fundamental block diagram of a high-speed video camera according to the present invention.
FIG. 2 is a schematic depiction of an embodiment of a solid-state image sensor with addresses assigned to pixels in the high-speed video camera according to the present invention.
FIG. 3 is a schematic depiction of the structure of one pixel block shown in FIG. 2.
FIG. 4 is a schematic depiction of an operation timing chart of the solid-state image sensor according to the present invention.
FIG. 5 is a schematic depiction of a procedure of an interpolation processing circuit in the high-speed video camera according to the present invention.

Embodiments of a high-speed video camera according to the present invention will be explained with reference to the drawings.

### Embodiment 1

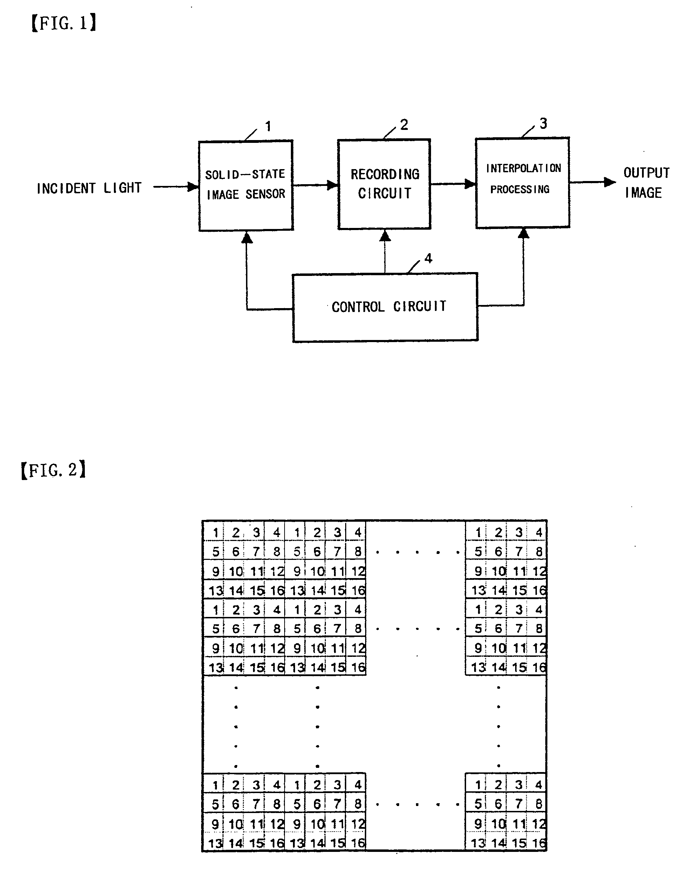

FIG. 1 depicts a fundamental block diagram of a first embodiment of a high-speed video camera according to the present invention.

In the present invention, a scene is photographed by a solid-state image sensor 1.

The solid-state image sensor 1 is controlled by a camera control circuit 4 so as to attain a high-speed photographing and sequential reading of an image information obtained from the solid-state image sensor 1. The image information is recorded in a recording circuit 2.

As shown in FIG. 2, the solid-state image sensor 1 is composed of 1024 pixels arranged lengthwise and 1024 pixels arranged breadthwise. Such solid-state image sensor 1 may be formed by 256 pixel blocks arranged lengthwise and 256 pixel blocks arranged breadthwise, each pixel block being composed of 4 pixels arranged lengthwise and of 4 pieces arranged breadthwise.

Addresses 1 to 16 are assigned to the 16 pixels in each of the pixel blocks, respectively, and the same addresses are assigned to the pixels of the same coordinates in the pixel blocks.

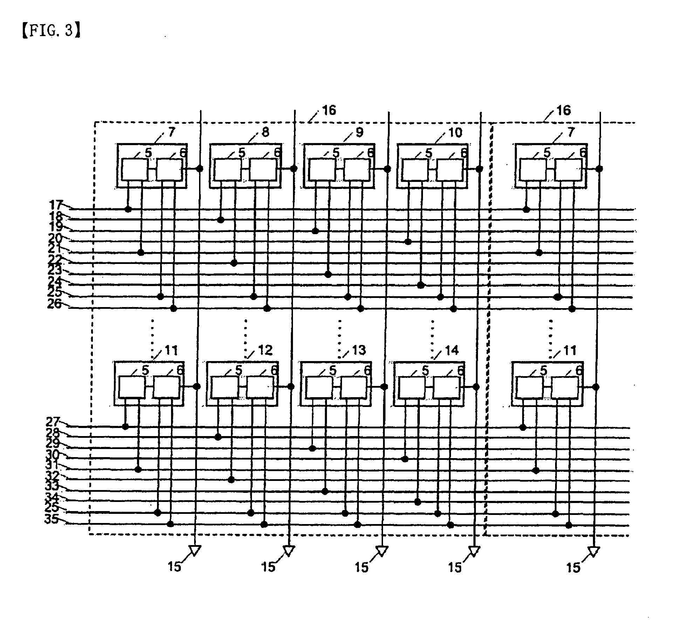

FIG. 3 shows one pixel block consisting of 4 pixels arranged lengthwise and of 4 pixels arranged breadthwise.

A photoelectric transducer 5 and a pixel memory 6 for storing therein temporarily an image signal from the photoelectric transducer 5 are arranged in each of the pixels 7 of the address 1 to the pixels 14 of the address 16, respectively.

In the present invention, an interpolation processing circuit 3 is controlled by the camera control circuit 4, so that image signals of one frame obtained from the recording circuit 2 are separated into signals for pixels of the same address in the pixel blocks.

The separated signals are arranged to the original coordinate positions in the solid-state image sensor 1, and then an image information at vacant coordinate positions is interpolated.

The image signals stored in the pixel memories 6 are eliminated by a memory clear control line 25 for the all pixels just before a scene is photographed at a high-speed by the solid-state image sensor 1.

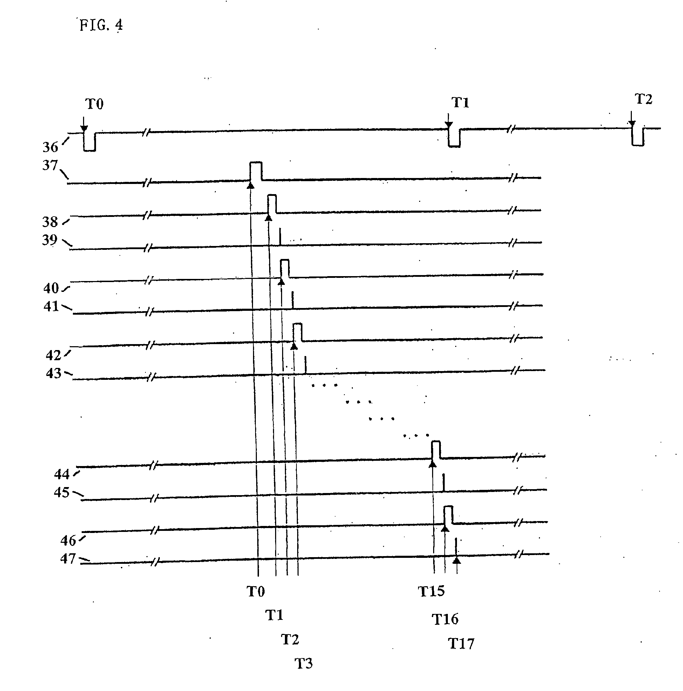

FIG. 4 shows an operation timing chart of the solid-state image sensor 1 of the present invention. In FIG. 4, a memory clear timing of the all pixels is shown by a numeral 37.

A signal is applied to an exposure control line 17 for the all pixel blocks, so that pixels of address 1 in the pixel blocks are exposed at the same time, and that video signals of a 1st frame are obtained from the photoelectric transducer 5 in the pixels 7 of the address 1. The video signals are transferred from the photoelectric transducer 5 to the pixel memories 6 and stored in the pixel memories 6 by applying a signal to a memory transfer control line 21 for the all pixel blocks, direct after the exposure is completed.

An exposure timing of the pixels of the address 1 is shown by a numeral 38.

A memory transfer timing of the pixels of the address 1 is shown by a numeral 39. The control signals for the exposure and the memory transfer are applied from the camera control circuit 4 to the solid-state image sensor 1.

Similarly, video signals of a 2nd frame are transferred from the photoelectric transducer 5 to the pixel memories 6 in the pixels 8 of the address 2 and stored in the pixel memories 6 by a exposure control line 18 and a memory transfer control line 22.

In FIG. 4, a reference numeral 40 denotes an exposure timing of the pixels of the address 2, and 41 denotes a transfer timing of the memories in the pixels of the address 2. Similarly, video signals of 3rd to 16th frames are stored in the pixel memories 9 of the address 3 to the pixel memories 14 of the address 16.

The above controls are carried out by exposure control lines 19, 20 and 27-30, and memory transfer control lines 23, 24, and 31-34. In FIG. 4, an exposure timing of the pixels of the address 3 is shown by a numeral 42, an exposure timing of the pixels of the address 15 is shown by a numeral 44, an exposure timing of the pixels of the address 16 is shown by a numeral 46, and memory transfer timings of the pixels of the address 3, 15 and 16 are shown by numerals 43, 45 and 47, respectively.

After the high-speed photographing of 16 frames have been completed by the above manner, video signals in the all pixels are read out sequentially by using read control lines from a read control line 26 for reading 4m rows of pixels to a read control line 35 for reading ( 4m + 3 ) rows, ( where m is values between 0 to 255 ) over a time corresponding to one frame between a time T1 and a time T2 shown in FIG. 4.

In FIG. 4, a time between a time T0 and the time T1 corresponds also to one frame, and is a time required for reading all pixels, as well as a time between times t1 and t2 is a time difference between the photographing speeds (time).

Intervals of the times t1 to t17 shown in FIG. 4 are the same. A reciprocal of the time difference is a photographing speed (time).

If the time difference between the photographing speeds ( time ) is considered as 1 microsecond and the time corresponding to one frame is 1 millisecond, a video information of 16 frames for 256 pixels x 256 pixels will be acquired 1000 times for every millisecond at photographing speed ( time ) of 1 million frame per second. Although the photographing speed ( time ) of the conventional solid-state image sensor or camera is decided by a time for reading all pixels, the photographing speed ( time ) of the camera of the present invention is decided by the time difference of the exposure times.

As stated above, the video information obtained from the solid-state image sensor 1 is recorded in the recording circuit 2.

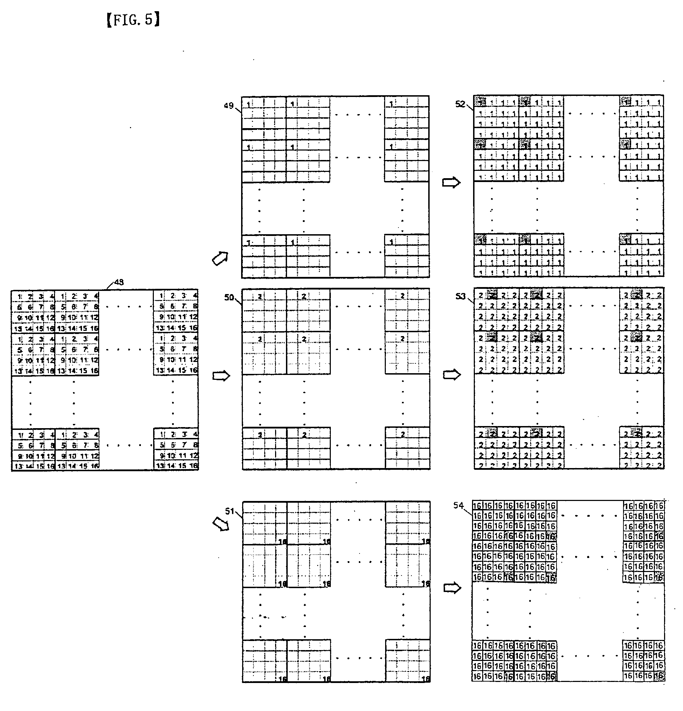

In FIG. 5, a reference numeral 48 denotes a video information of one frame recorded in the recording circuit 2.

The video information 48 acquired from the recording circuit 2 is separated into video information 49 to 51 corresponding to the pixels of the same address in the pixel blocks, and arranged in the positions of the solid-state image sensor 1 by the interpolation processing circuit 3. In FIG. 5, the video information 49 is obtained by separating pixels of address 1, the video information 50 is obtained by separating pixels of address 2 and the video signal 51 is obtained by separating pixels of address 16.

The interpolation processing circuit 3 creates a video information corresponding to vacant coordinates positions. The created video images comprise a video image 52 obtained from the video image 49 by the interpolation, a video image 53 obtained from the video image 50 by the interpolation, and a video image 54 obtained from the video image 51 by the interpolation.

As shown in the previous example, video images of 16 frames for 1024 pixels x 1024 pixels at photographing speed ( time ) of 1 million frame per second can be obtained.

In the solid-state image sensor according to the present invention, a higher photographing speed (time) can be obtained by increasing from one to two or more the number of the exposure control lines and the memory transfer control lines of the solid state image sensor.

If two or more exposure control lines and memory transfer control lines are treated as one, respectively, the same operation as in the conventional solid-state image sensor can be carried out, and a broad usage is possible.

While the invention has been particularly shown and described with reference to the preferred embodiments thereof, it will be understood by those skilled in the art that various changes in form and details may be made therein without departing from the spirit and scope of the invention as defined by the appended claims.

## Claims

1. A high-speed video camera comprising a solid-state image sensor consisting of a plurality of pixel blocks arranged lengthwise and breadthwise, each pixel block consisting of a plurality of pixels arranged lengthwise and breadthwise, control means for controlling so that exposure times of pixels in each of the pixel blocks are different from one another, and control means for controlling so that a plurality of different address are assigned to the pixels, respectively, the same address are assigned to the pixels of the same coordinate in the pixel blocks, and exposure times of pixels of the same address in the pixel blocks are the same with one another.

2. The high-speed video camera as claimed in claim 1, wherein video signals of one frame obtained from the solid-state image sensor are separated into signals for pixels of the same address in the pixel blocks and arranged to original coordinate positions in the solid-state image sensor, and an output is obtained after interpolating video signals of vacant coordinate positions in the solid-state image sensor.

3. The high-speed video camera as claimed in claim 1 or 2, wherein each of the pixels has a photoelectric transducer and a pixel memory for storing therein temporarily an video information obtained from the photoelectric transducer.
